# EUROPEAN PATENT APPLICATION

(11) **EP 3 786 204 A1**
(43) Date of publication of application: **03.03.2021**
(21) Application number: 19791761.0
(22) Date of filing: 23.04.2019
(51) Int. Cl.: C08F 299/02, B32B 27/00, B32B 27/18, C08F 290/06

(54) **CURABLE COMPOSITION, CURED PRODUCT AND LAMINATE**

(30) Priority: 27.04.2018 JP 2018087627
(71) Applicant: Mitsubishi Chemical Corporation, Chiyoda-ku Tokyo 100-8251 (JP)
(72) Inventor: IIDA Yuka, Tokyo 100-8251 (JP); MIYACHI Akira, Tokyo 100-8251 (JP); MUKUDA Takahiro, Tokyo 100-8251 (JP)
(74) Representative: Hoffmann Eitle
(86) International application number: PCT/JP2019/017171
(87) International publication number: WO 2019/208554

(57) **Abstract**

The present invention provides a curable composition which has a viscosity suitable for spray coating even at a high solid content and from which a cured product, on which precipitation of an ultraviolet absorber is suppressed and which has excellent weatherability and hot water resistance, is obtained, a cured product using the curable composition, and a stacked body.

Provided is a curable composition including: a (meth)acrylate A; a urethane (meth)acrylate B; an ultraviolet absorber C; and a photopolymerization initiator D, in which the (meth)acrylate A has at least one of a dendrimer structure and a hyperbranched structure, a content of the (meth)acrylate A is 55 parts by mass to 95 parts by mass based on 100 parts by mass in total of the (meth)acrylate A and the urethane (meth)acrylate B, a content of the ultraviolet absorber C is 1.5 parts by mass to 60 parts by mass based on 100 parts by mass in total of the (meth)acrylate A and the urethane (meth)acrylate B, a solid content concentration of the curable composition is greater than or equal to 70 mass%, and a viscosity of the curable composition at 25°C which is measured with an E-type viscometer is less than or equal to 200 mPa·s.

## Description

### [Technical Field]

The present invention relates to a curable composition, a cured product, and a stacked body.

Priority is claimed on Japanese Patent Application No. 2018-087627, filed April 27, 2018, the content of which is incorporated herein by reference.

### [Background Art]

Polycarbonate resins are widely used as engineering plastics having extremely excellent transparency, easy moldability, heat resistance, and impact resistance, and are, in automotive applications, widely used as materials for a headlamp lens, a tail lamp, a side cover lamp, glazing, and the like.

However, because polycarbonate resins have insufficient abrasion resistance, surfaces thereof are likely to become scratched, and they have insufficient weatherability compared to other engineering plastics.

For this reason, a method for applying a coating agent to form a coated film having excellent abrasion resistance and weatherability is known as a method for imparting abrasion resistance and weatherability to a surface of a plastic.

Such a coating agent contains an organic solvent so as to have a viscosity suitable for coating. However, from the viewpoint of the environmental load, coating agents having a reduced content of organic solvent and a viscosity suitable for coating at a high solid content have been studied.

For example, a curable composition in which a polyfunctional (meth)acrylate having a multi-branched skeleton is used is disclosed in Patent Literature 1.

### [Citation List]

### [Patent Literature]

[Patent Literature 1]
Japanese Unexamined Patent Application, First Publication No. 2016-190998

### [Summary of Invention]

### [Technical Problem]

However, in the method disclosed in Patent Literature 1, an optimum viscosity for spray coating cannot be obtained and whitening occurs due to an ultraviolet absorber precipitated on a surface. Therefore, sufficient weatherability is not obtained.

An object of the present invention is to provide a curable composition which has a viscosity suitable for spray coating even at a high solid content and from which a cured product, on which precipitation of an ultraviolet absorber is suppressed and which has excellent weatherability and hot water resistance, is obtained, a cured product using the curable composition, and a stacked body.

### [Solution to Problem]

The present invention has the following aspects.
[1] A curable composition including: a (meth)acrylate A; a urethane (meth)acrylate B; an ultraviolet absorber C; and a photopolymerization initiator D, in which the (meth)acrylate A has at least one of a dendrimer structure and a hyperbranched structure, a content of the (meth)acrylate A is 55 parts by mass to 95 parts by mass based on 100 parts by mass in total of the (meth)acrylate A and the urethane (meth)acrylate B, a content of the ultraviolet absorber C is 1.5 parts by mass to 60 parts by mass based on 100 parts by mass in total of the (meth)acrylate A and the urethane (meth)acrylate B, a solid content concentration of the curable composition is greater than or equal to 70 mass%, and a viscosity of the curable composition at 25°C which is measured with an E-type viscometer is less than or equal to 200 mPa·s.
[2] The curable composition according to [1], further including: a (meth)acrylate E having a polycarbonate skeleton.
[3] The curable composition according to [2], in which the (meth)acrylate E is a cyclohexyl group-containing polycarbonate diol diacrylate.
[4] The curable composition according to any one of [1] to [3], in which the ultraviolet absorber C is a hydroxyphenyltriazine-based ultraviolet absorber.
[5] The curable composition according to any one of [1] to [4], in which the number of acryloyl groups of the (meth)acrylate A is 4 to 18.
[6] The curable composition according to any one of [1] to [5], in which a mass average molecular weight of the (meth)acrylate A is 500 to 5,000.
[7] The curable composition according to any one of [1] to [6], in which a viscosity of the (meth)acrylate A at 20°C which is measured with an E-type viscometer is 10 mPa·s to 10,000 mPa·s.
[8] A cured product of the curable composition according to any one of [1] to [7].
[9] A stacked body including: a base material; and a layer which is provided on the base material and consisting of the cured product according to [8].
[10] The stacked body according to [9], in which the base material is a plastic base material.

### [Effects of Invention]

The curable composition of the present invention has a viscosity suitable for spray coating even at a high solid content. In addition, according to the curable composition of the present invention, a cured product on which precipitation of an ultraviolet absorber is suppressed and which has excellent weatherability and hot water resistance can be obtained.

The cured product of the present invention has excellent weatherability and hot water resistance.

The stacked body of the present invention has excellent weatherability and hot water resistance.

### [Description of Embodiments]

An expression "(meth)acrylic" used in the present specification means one or both of "acrylic" and "methacrylic". In addition, an expression "(meth)acryloyl" used means one or both of "acryloyl" and "methacryloyl". Furthermore, an expression "(meth)acrylate" used means one or both of "acrylate" and "methacrylate".

The "number of (meth)acryloyl group functional groups" in the present specification means the number of (meth)acryloyl groups contained in one molecule of a (meth)acrylate. The "number of (meth)acryloyl group functional groups" means the "number of acryloyl groups of (meth)acrylates."

"Bleed-out" in the present specification means a phenomenon in which an ultraviolet absorber is precipitated on the surface of a cured product to cause whitening on the surface of the cured product.

### <Curable Composition>

The curable composition of the present invention contains a (meth)acrylate A, a urethane (meth)acrylate B, an ultraviolet absorber C, and a photopolymerization initiator D.

The (meth)acrylate A has at least one of a dendrimer structure and a hyperbranched structure.

The (meth)acrylate A having at least one of the dendrimer structure and the hyperbranched structure has effects of reducing the viscosity of the curable composition of the present invention, improving bending resistance of the cured product of the curable composition of the present invention, and suppressing warpage.

The dendrimer structure means a structure in which a branched structure is further branched to form a multiple-branched structure which radially expands.

The hyperbranched structure means a structure in which the multiple-branched structure does not have a radial shape, and extends in a branched shape in a predetermined direction or predetermined two or more directions.

The (meth)acrylate A is a polyfunctional (meth)acrylate having (meth)acryloyl groups in a plurality of distal portions of the multiple-branched structure.

The number of (meth)acryloyl group functional groups is preferably greater than or equal to 4 and more preferably greater than or equal to 6 from the viewpoint of curability. In addition, the number of (meth)acryloyl group functional groups is preferably less than or equal to 18 and more preferably less than or equal to 16 from the viewpoint of curing shrinkage.

As the (meth)acrylate A, ones produced through well-known production methods may be used, and commercially available ones may be used. Examples of the method for producing the (meth)acrylate A include a method disclosed in Japanese Unexamined Patent Application, First Publication No. 2016-190998.

Examples of the (meth)acrylates having a dendrimer structure include VISCOAT (registered trademark) #1000, SIRIUS-501, and SUBARU-501 manufactured by OSAKA ORGANIC CHEMICAL INDUSTRY LTD.

Examples of the (meth)acrylates having a hyperbranched structure include CN2302, CN2303, and CN2304 manufactured by SARTOMER.

VISCOAT #1000 manufactured by OSAKA ORGANIC CHEMICAL INDUSTRY LTD. and CN2302 and CN2303 manufactured by SARTOMER are preferable as the (meth)acrylate A from the viewpoint that in this case the viscosity of the curable composition can be further lowered to improve spray coating properties.

The mass average molecular weight (Mw) of the (meth)acrylate A is preferably less than or equal to 5,000 and more preferably less than or equal to 3,000 from the viewpoint that the viscosity of the curable composition is further lowered to improve spray coating properties. In addition, the mass average molecular weight (Mw) of the (meth)acrylate A is preferably greater than or equal to 500 and more preferably greater than or equal to 1,000 from the viewpoint that the cured product has superior bending resistance.

The mass average molecular weight (Mw) is a standard polystyrene conversion value measured through a gel permeation chromatography method (GPC method).

The viscosity of the (meth)acrylate A at 20°C (hereinafter, also referred to as "the viscosity (at 20°C)" is preferably less than or equal to 10,000 mPa·s, more preferably less than or equal to 7,000 mPa·s, and still more preferably less than or equal to 4,000 mPa·s from the viewpoint of spray coating properties of the curable composition. In addition, the viscosity of the (meth)acrylate A (at 20°C) is preferably greater than or equal to 10 mPa·s, more preferably greater than or equal to 20 mPa·s, and still more preferably greater than or equal to 40 mPa·s from the viewpoint of curability.

Accordingly, the viscosity of the (meth)acrylate A (at 20°C) is preferably 10 mPa·s to 10,000 mPa·s, more preferably 20 mPa·s to 7,000 mPa·s, and still more preferably 40 mPa·s to 4,000 mPa·s.

The viscosity of the (meth)acrylate A (at 20°C) is a value measured with an E-type viscometer.

The content of the (meth)acrylate A in the curable composition of the present invention is 55 parts by mass to 95 parts by mass, preferably 60 parts by mass to 90 parts by mass, and more preferably 65 parts by mass to 80 parts by mass based on 100 parts by mass in total of the (meth)acrylate A and the urethane (meth)acrylate B.

In the case where the mass proportion of the (meth)acrylate A is within these ranges, bleed-out of an ultraviolet absorber can be suppressed. In addition, in the case where the mass proportion of the (meth)acrylate A is greater than or equal to the lower limit value, the cured product of the curable composition has excellent weatherability and hot water resistance. In the case where the mass proportion of the (meth)acrylate A is lower than or equal to the upper limit value, the curable composition has a low viscosity and excellent spray coating properties, and the cured product of the curable composition has excellent weatherability and hot water resistance.

A urethane (meth)acrylate having two or more urethane bonds and two or more (meth)acryloyloxy groups in one molecule is preferable as the urethane (meth)acrylate B. Examples of the urethane (meth)acrylate include the following urethane (meth)acrylate (B1) and urethane (meth)acrylate (B2).
Urethane (meth)acrylate (B1): Reaction product of hydroxy group-containing (meth)acrylate (b1) and polyisocyanate (b2)
Urethane (meth)acrylate (B2): Reaction product of hydroxy group-containing (meth)acrylate (b1), polyisocyanate (b2), and polyol compound (b3) having two or more hydroxy groups in one molecule

The hydroxy group-containing (meth)acrylate (b1) is not particularly limited as long as it is a (meth)acrylate having a hydroxy group and a (meth)acryloyloxy group.

Specific examples of the hydroxy group-containing (meth)acrylates (b1) include 2-hydroxyethyl acrylate (HEA), 2-hydroxyethyl methacrylate (HEMA), 2-hydroxypropyl acrylate (HPA), 2-hydroxypropyl methacrylate (HPMA), 4-hydroxybutyl acrylate (HBA), 4-hydroxybutyl methacrylate (HBMA), a caprolactone 1 mol adduct (Placcel (registered trademark) FA1 of Daicel Corporation) of HEA, a caprolactone 2 mol adduct (Placcel FA2D) of HEA, a caprolactone 5 mol adduct (Placcel FA5) of HEA, a caprolactone 10 mol adduct (Placcel FA10L) of HEA, and a compound having a mono- or polypentaerythritol skeleton. Specific examples of compounds having a mono- or polypentaerythritol skeleton include pentaerythritol tri(meth)acrylate, dipentaerythritol tri(meth)acrylate, dipentaerythritol tetra(meth)acrylate, and dipentaerythritol penta(meth)acrylate.

The hydroxy group-containing (meth)acrylates (b1) may be used alone or in combination of two or more thereof.

Among these hydroxy group-containing (meth)acrylates (b1), 2-hydroxyethyl acrylate, 2-hydroxypropyl acrylate, 2-hydroxybutyl acrylate, pentaerythritol triacrylate, a caprolactone 1 mol adduct (Placcel FA1) of HEA manufactured by Daicel Corporation, and a caprolactone 2 mol adduct (Placcel FA2D) of HEA are preferable from the viewpoints of easy availability, reactivity, and solubility in the curable composition.

The polyisocyanate (b2) is not particularly limited as long as it is a polyisocyanate having two or more isocyanate groups in one molecule.

Specific examples of the polyisocyanates (b2) include aliphatic polyisocyanates such as hexamethylene diisocyanate (HDI), trimethylhexamethylene diisocyanate (TMHDI), and lysine diisocyanate; alicyclic polyisocyanates such as norbornane diisocyanate (NBDI), trans-cyclohexane-1,4-diisocyanate, isophorone diisocyanate (IPDI), bis(isocyanatomethyl) cyclohexane (hydrogenated XDI), and dicyclohexylmethane diisocyanate (hydrogenated MDI); aromatic polyisocyanates such as 2,4-tolylene diisocyanate (2,4-TDI), 2,6-tolylene diisocyanate (2,6-TDI), 4,4'-diphenylmethane diisocyanate (4,4'-MDI), 2,4'-diphenylmethane diisocyanate (2,4'-MDI), 1,4-phenylene diisocyanate, polymethylene polyphenylene polyisocyanate, xylylene diisocyanate (XDI), tetramethyl xylylene diisocyanate (TMXDI), tolidine diisocyanate (TODI), 1,5-naphthalene diisocyanate (NDI), and triphenylmethane triisocyanate; and isocyanurate products, adduct products, and biuret products thereof.

The polyisocyanates (b2) may be used alone or in combination of two or more thereof.

Among the polyisocyanates (b2), an aliphatic polyisocyanate or an alicyclic polyisocyanate is preferable, and hexamethylene diisocyanate (HDI), isophorone diisocyanate (IPDI), bis(isocyanatomethyl) cyclohexane (hydrogenated XDI), dicyclohexylmethane diisocyanate (hydrogenated MDI), an isocyanurate product (product name: Duranate TPA-100) of hexamethylene diisocyanate manufactured by Asahi Kasei Corporation, an adduct product (product name: Duranate P301-75E) of hexamethylene diisocyanate, a biuret product (product name: Duranate 24A-100) of hexamethylene diisocyanate, and a bifunctional type (product name: Duranate A-201H) of hexamethylene diisocyanate are more preferable from the viewpoint of excellent weatherability.

The polyol (b3) is not particularly limited as long as it is a polyol having two or more hydroxy groups in one molecule.

Specific examples of the polyols (b3) include ethylene glycol, propylene glycol, diethylene glycol, butylene glycol, neopentyl glycol, 1,6-hexanediol, 3-methyl-1,5-pentanediol, 3,3'-dimethylol heptane, polyoxyethylene glycol, polyoxypropylene glycol, polytetramethylene ether glycol (PTMG), polycarbonate polyols (such as polycarbonate diols), and lactone-based diols.

The polyols (b3) may be used alone or in combination of two or more thereof.

Polycarbonate polyols are preferable as the polyols (b3) from the viewpoint of weatherability.

The polycarbonate polyols preferably have a branched alkyl structure. In the case where the polyols (b3) are polycarbonate polyols having a branched alkyl structure, the viscosity of the curable composition can be reduced, the smoothness after spray coating can be maintained, and the flexibility of the cured product of the curable composition improves.

The number average molecular weight of the polycarbonate polyol is preferably within a range of 500 to 4,000. In the case where the number average molecular weight is greater than or equal to 500, the weatherability of the cured product of the curable composition further improves. In the case where the number average molecular weight is less than or equal to 4,000, the scratch resistance of the cured product improves. The number average molecular weight is a value calculated from a hydroxyl value and the number of hydroxyl groups in one molecule.

The polycarbonate polyols can be, for example, produced through a transesterification reaction between a carbonic acid ester and a polyhydric alcohol having a branched alkyl structure.

Specific examples of the polyhydric alcohols having a branched alkyl structure include 3-methyl-1,5-pentanediol, neopentyl glycol, 2-ethyl-1,3-hexanediol, and 2-methyl-1,8-octanediol.

Specific examples of the carbonic acid esters include ethylene carbonate, dimethyl carbonate, diethyl carbonate, di-n-propyl carbonate, diisopropyl carbonate, dibutyl carbonate, dicyclohexyl carbonate, and diphenyl carbonate.

Commercially available products may be used as the polycarbonate polyols. Examples of the commercially available products of the polycarbonate polyols which have a branched alkyl structure and a number average molecular weight in the range of 500 to 4,000 include Kuraray Polyol C-590, Kuraray Polyol C-770, Kuraray Polyol C-1050, Kuraray Polyol C-1090, Kuraray Polyol C-1065, Kuraray Polyol C-1015N, Kuraray Polyol C-2090, and Kuraray Polyol C-3090 manufactured by Kuraray Co., Ltd.

The urethane (meth)acrylates (B1) are obtained by reacting the hydroxy group-containing (meth)acrylates (b1) with the polyisocyanates (b2).

Regarding the reaction conditions, conditions including heat being applied are preferable. Examples thereof include conditions such as 70°C for 8 hours.

A reaction product of pentaerythritol triacrylate and isophorone diisocyanate; a reaction product of Placcel FA-2D and Duranate TPA-100; and a reaction product of Placcel FA-2D and Duranate A-201H can be suitably used as the urethane (meth)acrylates (B1), for example.

The urethane (meth)acrylates (B2) are obtained by reacting the hydroxy group-containing (meth)acrylates (b1), the polyisocyanates (b2), the polyisocyanates (b2), and the polyols (b3) with each other.

Regarding the reaction conditions, conditions including heat being applied are preferable. Examples thereof include conditions such as 70°C for 8 hours.

Reaction products of the polycarbonate polyols, diisocyanate compounds having an alicyclic structure, and mono(meth)acrylate compounds having a hydroxy group can be suitably used as the polyurethane (meth)acrylates (B2), for example.

The mass average molecular weight (Mw) of the urethane (meth)acrylates B is preferably less than or equal to 8,000 and more preferably less than or equal to 3,000 from the viewpoint that in this case the viscosity of the curable composition is further lowered to improve spray coating properties. In addition, the mass average molecular weight (Mw) of the urethane (meth)acrylates B is preferably greater than or equal to 500 and more preferably greater than or equal to 1,000 from the viewpoint that in this case the cured product has superior bending resistance.

The mass average molecular weight (Mw) of the urethane (meth)acrylates B is a value measured in the same manner as the mass average molecular weight (Mw) of the (meth)acrylates A.

The content of the urethane (meth)acrylates B in the curable composition of the present invention is preferably 5 parts by mass to 45 parts by mass, more preferably 10 parts by mass to 40 parts by mass, and still more preferably 15 parts by mass to 30 parts by mass based on 100 parts by mass in total of the (meth)acrylate A and the urethane (meth)acrylate B.

In the case where the mass proportion of the urethane (meth)acrylates B is within these ranges, bleed-out of an ultraviolet absorber can be further suppressed. In addition, in the case where the mass proportion of the urethane (meth)acrylates B is greater than or equal to the lower limit value, the cured product of the curable composition has excellent weatherability and hot water resistance. In the case where the mass proportion of the urethane (meth)acrylates B is less than or equal to the upper limit value, the curable composition has low viscosity and superior spray coating properties.

The curable composition of the present invention contains an ultraviolet absorber C. The weatherability of the cured product of the curable composition improves due to the ultraviolet absorber C being incorporated.

The ultraviolet absorber C is not particularly limited as long as it can absorb ultraviolet rays. However, the ultraviolet absorber C is preferably one that can be uniformly dissolved in the curable composition and has a high ultraviolet-absorbing ability.

A compound derived from at least one selected from the group consisting of benzophenone, benzotriazole, hydroxyphenyltriazine, phenyl salicylate, and phenyl benzoate is preferable as the ultraviolet absorber C from the viewpoints of solubility and weatherability with respect to the curable composition. The compound preferably has a maximum absorption wavelength within a range of 240 nm to 380 nm.

An ultraviolet absorber based on benzophenone, benzotriazole, or hydroxyphenyltriazine is more preferable as the ultraviolet absorber C from the viewpoint that it can be contained in the curable composition in a large amount.

An ultraviolet absorber based on benzotriazole or hydroxyphenyltriazine is more preferable as the ultraviolet absorber C from the viewpoint of more easily suppressing bleed-out of the cured product.

A hydroxyphenyltriazine-based ultraviolet absorber is still more preferable as the ultraviolet absorber C from the viewpoint of preventing a base material such as a polycarbonate resin from yellowing.

Specific examples of the ultraviolet absorbers C include benzophenone-based ultraviolet absorbers such as 2-hydroxybenzophenone, 5-chloro-2-hydroxybenzophenone, 2,4-dihydroxybenzophenone, 2-hydroxy-4-methoxybenzophenone, 2-hydroxy-4-octyloxybenzophenone, 4-dodecyloxy-2-hydroxybenzophenone, 2-hydroxy-4-octadesiloxybenzophenone, 2,2'-dihydroxy-4-methoxybenzophenone, and 2,2'-dihydroxy-4,4'-dimethoxybenzophenone; benzotriazole-based ultraviolet absorbers such as 2-(2-hydroxy-5-methylphenyl)benzotriazole, 2-(2-hydroxy-5-tert-butylphenyl)benzotriazole, 2-(2-hydroxy-3,5-di-tert-butylphenyl)-5-chlorobenzotriazole, 2-(2-hydroxy-3,5-di-tert-butylphenyl)benzotriazole, 2-(2-hydroxy-5-tert-octylphenyl)benzotriazole, and 2-(2-hydroxy-5-(2-methacryloyloxyethyl)phenyl)-2H-benzotriazole; hydroxyphenyltriazine-based ultraviolet absorbers such as 2-[4-[(2-hydroxy-3-dodecyloxypropyl)oxy]-2-hydroxyphenyl]-4,6-bis(2,4-dimethylphenyl)-1,3,5-triazine, 2-[4-[(2-hydroxy-3-tridecyloxypropyl)oxy]-2-hydroxyphenyl]-4,6-bis(2,4-dimethylphenyl)-1,3,5-triazine, 2-[4-[(2-hydroxy-3-(2'-ethyl)hexyl)oxy]-2-hydroxyphenyl]-4,6-bis(2,4-dimethylphenyl)-1,3,5-triazine, 2,4-bis(2-hydroxy-4-butyloxyphenyl)-6-(2,4-bis-butyloxyphenyl)-1,3,5-triazine, and 2-(2-hydroxy-4-[1-octyloxycarbonylethoxy]phenyl)-4,6-bis(4-phenylphenyl)-1,3,5-triazine; and phenyl salicylate, p-tert-butylphenyl salicylate, p-(1,1,3,3-tetramethylbutyl)phenyl salicylate, 3-hydroxyphenyl benzoate, and phenylene-1,3-dibenzoate.

Among the ultraviolet absorbers, at least one selected from 2-[4-[(2-hydroxy-3-dodecyloxypropyl)oxy]-2-hydroxyphenyl]-4,6-bis(2,4-dimethylphenyl)-1,3,5-triazine, 2-[4-[(2-hydroxy-3-(2-ethyl)hexyl)oxy]-2-hydroxyphenyl]-4,6-bis(2,4-dimethylphenyl)-1,3,5-triazine, 2,4-bis(2-hydroxy-4-butyloxyphenyl)-6-(2,4-bis-butyloxyphenyl)-1,3,5-triazine, and 2-(2-hydroxy-4-[1-octyloxycarbonylethoxy]phenyl)-4,6-bis(4-phenylphenyl)-1,3,5-triazine is preferable from the viewpoint that in this case the ultraviolet-absorbing ability can be maintained over a long period of time in the cured product.

Furthermore, from the viewpoint of preventing ultraviolet deterioration in a base material such as a polycarbonate, a hydroxyphenyltriazine-based ultraviolet absorber having an absorbance at 350 nm of greater than or equal to 1.0 is preferable, and specifically, at least one selected from 2-[4-[(2-hydroxy-3-(2-ethyl)hexyl)oxy]-2-hydroxyphenyl]-4,6-bis(2,4-dimethylphenyl)-1,3,5-triazine, 2,4-bis(2-hydroxy-4-butyloxyphenyl)-6-(2,4-bis-butyloxyphenyl)-1,3,5-triazine, and 2-(2-hydroxy-4-[1-octyloxycarbonylethoxy]phenyl)-4,6-bis(4-phenylphenyl)-1,3,5-triazine is preferable is more preferable.

The absorbance is measured with a U-1900 spectrophotometer manufactured by Hitachi, Ltd.

The ultraviolet absorbers may be used in combination of two or more thereof.

The content of the ultraviolet absorber C in the curable composition of the present invention is 1.5 parts by mass to 60 parts by mass, more preferably 3 parts by mass to 50 parts by mass, and still more preferably 5 parts by mass to 20 parts by mass based on 100 parts by mass in total of the (meth)acrylate A and the urethane (meth)acrylate B. In the case where the content of the ultraviolet absorber C is greater than or equal to the lower limit value, the cured product of the curable composition has superior weatherability. In the case where the content of the ultraviolet absorber C is less than or equal to the upper limit value, the curability and the hot water resistance of the cured product of the curable composition are superior.

The curable composition of the present invention contains a photopolymerization initiator D. Since the curable composition contains the photopolymerization initiator D, the curable composition can be sufficiently cured by ultraviolet rays even in the presence of the ultraviolet absorber.

The photopolymerization initiator D is not particularly limited as long as it has good solubility in the curable composition and can initiate polymerization of acrylic monomers or oligomers through irradiation with ultraviolet rays.

Specific examples of the photopolymerization initiator D include carbonyl compounds such as benzoin, benzoin methyl ether, benzoin ethyl ether, benzoin isopropyl ether, benzoin isobutyl ether, acetoin, butyroin, toluoin, benzyl, benzophenone, p-methoxybenzophenone, diethoxyacetophenone, 2,2-dimethoxy-2-phenylacetophenone, 2,2-dimethoxy-1,2-diphenylethane-1-one, methylphenyl glyoxylate, ethylphenyl glyoxylate, 4,4-bis(dimethylaminobenzophenone), 2-hydroxy-2-methyl-1-phenylpropane-1-one, 1-hydroxycyclohexyl phenyl ketone, and 1-(4-isopropylphenyl)-2-hydroxy-2-methylpropane-1-one; sulfur compounds such as tetramethylthiuram disulfide; azo compounds such as azobisisobutyronitrile, and azobis-2,4-dimethylvaleronitrile; peroxide compounds such as benzoyl peroxide and di-tert-butyl peroxide; acylphosphine oxide compounds such as 2,4,6-trimethylbenzoyldiphenylphosphine oxide, and bis(2,6-dimethoxybenzoyl)-2,4,4-trimethylpentylphosphine oxide.

Among the photopolymerization initiators D, benzophenone, methylphenyl glyoxylate, 2-hydroxy-2-methyl-1-phenylpropane-1-one, 1-hydroxycyclohexyl phenyl ketone, 2,2-dimethoxy-1,2-diphenylethane-1-one, and 2,4,6-trimethylbenzoyldiphenylphosphine oxide are preferable from the viewpoint of polymerization performance.

The photopolymerization initiators D may be used alone or in combination of two or more thereof.

Photopolymerization initiators having an absorption maximum within a wavelength range of 360 nm to 400 nm are preferable as the photopolymerization initiators D. By using the photopolymerization initiators D, radicals are generated due to ultraviolet rays when the curable composition is cured with ultraviolet rays, and a polymerizable composition (such as polymerizable monomers and polymerizable oligomers) can be efficiently polymerized even in a deep portion of a coated film to obtain a cured product having excellent adhesiveness to a base material.

In the case where the curable composition of the present invention is cured with ultraviolet rays, the content of the photopolymerization initiator D in the curable composition of the present invention is preferably greater than or equal to 0.05 parts by mass and more preferably greater than or equal to 0.1 parts by mass based on 100 parts by mass in total of the (meth)acrylate A, the urethane (meth)acrylate B, and the ultraviolet absorber C from the viewpoint of obtaining a sufficient polymerization degree. In addition, from the viewpoint of the curability, the content thereof is preferably less than or equal to 10 parts by mass, more preferably less than or equal to 5 parts by mass, and still more preferably less than or equal to 3 parts by mass.

It is preferable that the curable composition of the present invention further contain a (meth)acrylate E having a polycarbonate skeleton. The hot water resistance and the weatherability of the cured product of the curable composition further improve due to the (meth)acrylate E being incorporated.

Examples of the (meth)acrylates E include bifunctional acrylates having a polycarbonate skeleton such as polycarbonate diol diacrylates. Examples of the polycarbonate diol diacrylates include hydroxy group-terminated polycarbonate diol diacrylates and cyclohexyl group-containing polycarbonate diol diacrylates. A cyclohexyl group-containing polycarbonate diol diacrylate is preferable from the viewpoint of improving hot water resistance.

A commercially available product of a polycarbonate polyol diacrylate may be used as the (meth)acrylate E. Specific examples of the polycarbonate polyol diacrylates include UM-90DA and UH-100DA manufactured by UBE INDUSTRIES, LTD.

The (meth)acrylates E may be used alone or in combination of two or more thereof.

In the case where the curable composition of the present invention contains the (meth)acrylate E, the content of the (meth)acrylate E in the curable composition of the present invention is preferably 1 parts by mass to 30 parts by mass, more preferably 2 parts by mass to 25 parts by mass, and still more preferably 5 parts by mass to 20 parts by mass based on 100 parts by mass in total of the (meth)acrylate A and the urethane (meth)acrylate B. In the case where the content of the (meth)acrylate E is greater than or equal to the lower limit value, the cured product of the curable composition has excellent hot water resistance and weatherability. In the case where the content of the (meth)acrylate E is less than or equal to the upper limit value, the coated film hardness is superior.

The curable composition of the present invention can contain other (meth)acrylates as necessary.

The other (meth)acrylates mean compounds having a (meth)acryloyl group in addition to the (meth)acrylate A, the urethane (meth)acrylate B, and the (meth)acrylate E.

Examples of the other (meth)acrylates include cyclohexyl (meth)acrylate, 4-hydroxybutyl (meth)acrylate, and 3,3,5-trimethylcyclohexyl (meth)acrylate. The other (meth)acrylates may be used alone or in combination of two or more thereof.

It is necessary for the curable composition of the present invention to have a solid content concentration of greater than or equal to 70 mass% and a viscosity at 25°C which is measured with an E-type viscometer of less than or equal to 200 mPa·s.

In the case where the solid content concentration is greater than or equal to 70 mass% and the viscosity is less than or equal to 200 mPa·s, even if the amount of organic solvent used is small when performing coating such as spray coating, a favorable appearance can be obtained after the coating and the amount of VOC can be reduced.

The solid content concentration is preferably greater than or equal to 80 mass% from the viewpoint of environmental load, and is preferably less than or equal to 100 mass% and more preferably less than or equal to 90 mass% from the viewpoint of spray coating properties.

The solid content concentration is a mass ratio of a balance (solid content) obtained by removing the organic solvent from the curable composition with respect to the total mass of the curable composition.

The viscosity is preferably less than or equal to 100 mPa·s and more preferably less than or equal to 50 mPa·s. In addition, the viscosity is preferably greater than or equal to 10 mPa·s from the viewpoint of preventing liquid dripping after the spraying.

Examples of methods for reducing the viscosity to less than or equal to 200 mPa·s include a method for increasing the mass ratio of the (meth)acrylate A to the total mass of the (meth)acrylate A and the urethane (meth)acrylate B and a method of using the urethane (meth)acrylate B having a low viscosity.

Furthermore, the curable composition of the present invention may contain an organic solvent as another component. Due to the curable composition containing the organic solvent, uniform solubility of components of the curable composition, dispersion stability, adhesiveness of the cured product with a base material, smoothness of the cured product, uniformity, and the like improve.

The type of the organic solvent is not particularly limited. Specific examples of the organic solvent include alcohols, hydrocarbons, halogenated hydrocarbons, ethers, ketones, esters, and polyhydric alcohol derivatives. The organic solvents may be used alone or in combination of two or more thereof.

The curable composition of the present invention may further contain various additives such as a light stabilizer, an antioxidant, an anti-yellowing agent, a blueing agent, a pigment, a leveling agent, a defoaming agent, a thickener, a anti-precipitating agent, an antistatic agent, and an anti-fogging agent as necessary.

The curable composition of the present invention can be produced by homogeneously mixing the (meth)acrylate A, the urethane (meth)acrylate B, the ultraviolet absorber C, and the photopolymerization initiator D with each other using a stirrer generally used. The (meth)acrylate E and other components (such as an organic solvent and additives) may be added thereto as necessary.

### <Cured Product>

The cured product of the present invention can be obtained by irradiating the curable composition of the present invention with active energy rays such as ultraviolet rays to cure the curable composition. Examples of the active energy rays include ultraviolet rays, electron beams, X-rays, infrared rays, and visible rays.

In the case of curing the curable composition of the present invention through ultraviolet irradiation, various ultraviolet irradiation devices can be used, and a xenon lamp, a high pressure mercury lamp, a metal halide lamp, an LED-UV lamp, and the like can be used as its light source. In general, the irradiation dose of the ultraviolet rays is 10 mJ/cm² to 10,000 mJ/cm², preferably 100 mJ/cm² to 5,000 mJ/cm², and more preferably 150 mJ/cm² to 3,000 mJ/cm².

In the case where the curable composition of the present invention is cured through electron beam irradiation, various electron beam irradiation devices can be used. In general, the irradiation dose of the electron beams is 0.5 Mrad to 20 Mrad and preferably 1 Mrad to 15 Mrad.

The temperature when curing the curable composition of the present invention (temperature when performing irradiation with active energy rays) may be appropriately set in consideration of heat resistance, thermal deformation, or the like of a base material. The temperature when curing the curable composition is preferably 20°C to 200°C and more preferably 60°C to 150°C, for example. The curing time is preferably several minutes to several hours.

In the case where the curable composition of the present invention contains an organic solvent, the organic solvent may be volatilized by drying the curable composition before performing irradiation with active energy rays.

The drying temperature may be appropriately set in consideration of heat resistance or thermal deformation of a base material, a boiling point of the organic solvent, and the like. The drying temperature is preferably 20°C to 200°C and more preferably 60°C to 150°C, for example. The drying time is preferably several minutes to several hours.

### <Stacked Body>

The stacked body of the present invention includes a base material and a layer (hereinafter, also referred to as a "cured product layer") which is provided on the base material and consisting of the cured product of the present invention.

Examples of shapes of the base material include a film shape, a plate shape, and a three-dimensional shape.

Examples of the material of the base material include metallic materials such as galvanized steel, alloy galvanized steel, stainless steel, and tinned steel; and resins such as a polymethyl methacrylate resin, a polycarbonate resin, a polyester resin, a polystyrene resin, an ABS resin, an AS resin, a polyamide resin, a polyarylate resin, a polymethacrylimide resin, and a polyallyl diglycol carbonate resin.

A base material containing at least one selected from the group consisting of a polymethyl methacrylate resin, a polycarbonate resin, a polystyrene resin, and a polymethacrylimide resin is preferable from the viewpoint of a large effect such as improvement in weatherability due to provision of a cured product layer.

The thickness of the cured product layer is preferably 3 µm to 50 µm from the viewpoints of weatherability and crack reduction.

The stacked body of the present invention may contain a plurality of the base materials.

The stacked body of the present invention may contain a plurality of the cured product layers.

For example, the plural kinds of the cured product layers may be stacked on the base material. The plurality of the base material and the plurality of the cured product layers may be stacked. In a case where a base material has a film shape or a plate shape, the cured product layers may be stacked on one surface of the base material or may be stacked on both surfaces of the base material.

The stacked body of the present invention can be produced , for example, by coating the base material with the curable composition of the present invention to form a coated film and irradiating the coated film with active energy rays to cure the coated film.

The coating can be performed through well-known methods such as brush coating, bar coating, spray coating, dip coating, spin coating, and curtain coating.

Since the curable composition of the present invention has a viscosity suitable for spray coating, the spray coating method is preferable as the coating method.

The coated film can be cured in the same manner as the above-described curable composition of the present invention.

### [Examples]

Hereinafter, the present invention will be described in more detail using examples and comparative examples, but is not limited to these examples. The unit "parts" in the examples indicates "parts by mass".

Raw materials and evaluation methods used in the examples and comparative examples below are as follows.

### [Raw Material]

### <(Meth)acrylate A>

- CN2302: Acrylate (trade name of CN2302 manufactured by Sartomer Company, Inc.) having hyperbranched structure, (meth)acryloyl functional group number of 16, mass average molecular weight (Mw) of 1,500, and viscosity (at 20°C) of 350 mPa·s
- CN2303: Acrylate (trade name of CN2303 manufactured by Sartomer Company, Inc.) having hyperbranched structure, (meth)acryloyl functional group number of 6, mass average molecular weight (Mw) of 1,400, and viscosity (at 20°C) of 320 mPa·s
- V#1000: Acrylate (trade name of VISCOAT #1000 manufactured by OSAKA ORGANIC CHEMICAL INDUSTRY LTD.) having dendrimer structure, (meth)acryloyl functional group number of 16, mass average molecular weight (Mw) of 2,000, and viscosity (at 20°C) of 450 mPa·s

### <Comparative Product of (Meth)acrylate A>

- DPCA-20: Acrylic acid ester (trade name of KAYARAD DPCA-20 manufactured by Nippon Kayaku Co., Ltd.) of dipentaerythritol caprolactone

### <Urethane (Meth)acrylate B>

- PU-1: Polyfunctional urethane acrylate which is obtained in Production Example 1 below and has acryloyl group, (meth)acryloyl functional group number of 2, mass average molecular weight (Mw) of 2,059, and viscosity (at 25°C) of 4,600 mPa·s
- BU-1: Polyfunctional urethane acrylate which is obtained in Production Example 2 below and has acryloyl group, (meth)acryloyl functional group number of 2, mass average molecular weight (Mw) of 7,123, and viscosity (at 25°C) of greater than 102,400 mPa·s

### (Production Example 1: Production of PU-1)

300 Parts of Duranate A-201H (bifunctional isocyanate) manufactured by Asahi Kasei Chemicals Corporation was added to a four-neck flask equipped with a stirrer, a reflux condenser, a dropping funnel, and a thermometer, and the temperature in the system was raised to 70°C to dissolve the contents therein. Subsequently, after air was introduced into the liquid, 0.44 parts of 4-methoxyphenol as a polymerization inhibitor, 442.3 parts of Placcel FA-2D (lactone-modified acrylate) manufactured by Daicel Corporation, and 0.22 parts of dibutyltin dilaurate were added thereto to cause a reaction at the same temperature for 6 hours. After completion of the reaction, the reaction product was cooled to obtain a urethane acrylate PU-1.

### (Production Example 2: Production Method of BU-1)

530 Parts of dicyclohexylmethane diisocyanate and 300 ppm of di-n-butyltin dilaurate were added to a flask equipped with a dropping funnel with a heat retaining function, a reflux condenser, a stirrer, and a thermometer, and heated to 40°C. Thereafter, 800 parts (mass average molecular weight of 800) (1 mol) of Kuraray Polyol C-770 manufactured by Kuraray Co., Ltd. which was a polycarbonate diol was added dropwise over 4 hours as a polyol compound. After stirring the mixture at 40°C for 2 hours, the temperature was raised to 70°C over 1 hour. Thereafter, 232 parts of 2-hydroxyethyl acrylate was added dropwise over 2 hours, and the mixture was further stirred for 2 hours to obtain a urethane acrylate BU-1.

### <Ultraviolet Absorber C>

- Tinuvin 405: 2-(2,4-dihydroxyphenyl)-4,6-bis-(2,4-dimethylphenyl)-1,3,5-triazine (manufactured by BASF SE)
- Tinuvin PS: (2-Hydroxy-5-t-buthylphenyl)-2H-benzotriazole (manufactured by BASF SE)
- Seesorb 102: 2-Hydroxy-4-octylbenzophenone (manufactured by SHIPRO KASEI KAISHA, LTD.)

### <(Meth)acrylate E>

- UM-90DA: Polycarbonate diol diacrylate (trade name of UM-90DA, manufactured by UBE INDUSTRIES, LTD.)

### <Other Raw Materials>

- CHA: Cyclohexyl acrylate
- Benzophenone
- Speedcure MBF: Methyl benzoylformate (trade name of Speedcure MBF manufactured by Lambson Ltd.)
- Omnirad 651: 2,2-Dimethoxy-1,2-diphenylethane-1-one (trade name of Omnirad 651 manufactured by BASF SE)
- Speedcure TPO: 2,4,6-Trimethylbenzoyldiphenylphosphine oxide (trade name of Speedcure TPO manufactured by Lambson Ltd.)
- Tinuvin 123: Photostabilizer, a reaction product of decane diacid bis(2,2,6,6-tetramethyl-1-(octyloxy)-4-piperidinyl) ester, 1,1-dimethylethylhydroperoxide, and octane (trade name of Tinuvin 123 manufactured by BASF SE)
- BYK-333: Silicon-based leveling agent, polyether-modified polydimethylsiloxane (trade name of BYK-333 manufactured by BYK)
- PGM: Propylene glycol monomethyl ether (trade name of PM manufactured by KH Neochem Co., Ltd.)

### [Evaluation Method]

### <Viscosity (at 25°C) of Curable Composition>

Curable compositions were diluted with PGM so that the solid content concentrations of the curable compositions become concentrations disclosed in Tables 1 to 4, and the viscosities (at 25°C) were measured using an E-type viscometer TVE-20H (manufactured by TOKI SANGYO CO., LTD.)

### <Mass Average Molecular Weight (Mw)>

The mass average molecular weight (Mw) of polymers (such as (meth)acrylates A and urethane (meth)acrylates B) was a molecular weight in terms of standard polystyrene measured under conditions as follows through a gel permeation chromatography method (GPC method).
- Device: HLC-8320GPC type high-speed GPC device manufactured by TOSOH CORPORATION
- Ultraviolet (UV) detector: UV-8320 type manufactured by TOSOH CORPORATION
- Flow rate: 0.35 mL/minute
- Injection port temperature: 40°C
- Oven temperature: 40°C
- Differential refractometer (RI) temperature: 40°C
- UV Wavelength: 254 nm
- Sample injection amount: 10 µL
- Column: Three columns were connected in order of (1) to (3) below.
   (1) TSKgel SuperHZM-M (4.6 mmID x 15 cmL) manufactured by TOSOH CORPORATION
   (2) TSKgel SuperHZM-M (4.6 mmID x 15 cmL) manufactured by TOSOH CORPORATION
   (3) TSKgel HZ2000 (4.6 mmID x 15 cmL) manufactured by TOSOH CORPORATION
- Guard column: TSKguardcolumn SuperHZ-L (4.6 mmID x 3.5 cmL) manufactured by TOSOH CORPORATION
- Solvent: THF (stabilizer BHT)
- Sample concentration: The resin content was adjusted to 0.2 mass%.

### <Evaluation Sample>

A polycarbonate resin injection molded plate (Panlite L-1225Z-100 (trade name) with thickness of 3 mm manufactured by TEIJIN LIMITED) was coated with each curable composition using a spray or a bar coater (# 14). The coated plate was heated and dried in a far infrared (IR) drying furnace at 60°C for 300 seconds to form a coated film. Next, the formed coated film was irradiated with ultraviolet rays using a high pressure mercury lamp in an air atmosphere so that the irradiation dose measured with an ultraviolet light meter UV-351 manufactured by ORC MANUFACTURING CO., LTD. became 2,000 mJ/cm² (within a wavelength range of 340 nm to 380 nm) to cure the coated film to produce a cured product layer. The thickness of the cured product layer was within a range of 10 µm to 15 µm. Accordingly, a stacked body including a polycarbonate resin injection molded plate and a cured product layer was obtained. The obtained stacked body was used as an evaluation sample and evaluated as follows.

### <Spray Coating Properties>

The appearance of each evaluation sample was visually observed to evaluate spray coating properties. The determination criteria of the spray coating properties are as follows.

### • Determination Criteria

A (Favorable): No wrinkles or whitening are observed on the surface of an evaluation sample.
B (Okay): Wrinkles or whitened portions are observed on the surface of an evaluation sample.
C (Poor): The viscosity of a curable composition is too high so that spray coating cannot be performed.

Here, in a case where the result of the spray coating properties was "C", an evaluation sample was separately produced by performing coating on the polycarbonate resin injection molded plate using a bar coater and used for evaluating each item to be described below.

### <Hot water resistance-1>

An evaluation sample was immersed in hot water at 80°C using a constant-temperature water tank, and the change in appearance of the evaluation sample after 8 hours was visually observed to evaluate hot water resistance-1. The determination criteria of the hot water resistance-1 are as follows.

### • Determination Criteria

A (Favorable): No whitened portions or peeling are observed on the surface of an evaluation sample.
B (Okay): No peeling is observed on the surface of an evaluation sample, but slightly whitened portions are observed.
C (Poor): Peeling is observed on the surface of an evaluation sample.

### <Hot water resistance-2>

An evaluation sample was immersed in hot water at 60°C using a constant-temperature water tank, and the change in appearance of the evaluation sample after 240 hours was visually observed to evaluate hot water resistance-2. The determination criteria of the hot water resistance-2 are as follows.

### • Determination Criteria

A (Favorable): No whitening or peeling is observed on the surface of an evaluation sample.
B (Okay): No peeling is observed on the surface of an evaluation sample, but slight whitening is observed.
C (Poor): Peeling is observed on the surface of an evaluation sample.

### <Weatherability>

A weatherability test was performed on an evaluation sample using a weatherability tester, Sunshine Carbon Weather Meter (a WEL-SUN-HC-B type manufactured by Suga Test Instruments Co., Ltd.), under the conditions of a black panel temperature of 63°C ± 3°C and a cycle of rainfall for 12 minutes and irradiation for 48 minutes. The change in appearance after exposure for 2500 hours was visually observed to evaluate weatherability. The determination criteria of the weatherability are as follows.

### • Determination Criteria

A (Favorable): No cracks or peeling are observed on the surface of an evaluation sample.
B (Okay): Cracks are observed on the surface of an evaluation sample, but no peeling is observed.
C (Poor): Cracks and peeling are observed on the surface of an evaluation sample.

### [Example 1]

10 parts of CN2302, 5.5 parts of PU-1, 3 parts of Tinuvin 405, 14.5 parts of cyclohexyl acrylate (CHA), 0.3 parts of benzophenone, 0.3 parts of Speedcure MBF, 0.3 parts of Omnirad 651, 0.3 parts of Speedcure TPO, 0.15 parts of Tinuvin 123, and 0.04 parts of BYK-333 were homogeneously mixed with each other, and the mixture was diluted with PGM which was used as a diluting solvent so that the solid content concentration became each concentration described in Table 1 to obtain curable compositions. Evaluation samples were produced using the obtained curable compositions. The obtained curable compositions and the evaluation results of the evaluation samples are shown in Table 1.

### [Examples 2 to 14 and Comparative Examples 1 to 6]

Curable compositions were prepared in the same manner as in Example 1 except that the composition of the curable composition was changed as shown in Tables 1 to 4, and evaluation samples were produced. The obtained curable compositions and the evaluation results of the evaluation samples are shown in Tables 1 to 4.

Here, in Tables 1 to 4, the content α [parts by mass] of (meth)acrylate A is a content of (meth)acrylate A with respect to 100 parts by mass in total of the (meth)acrylate A and the urethane (meth)acrylate B.

Similarly, in Tables 1 to 4, the content β [parts by mass] of ultraviolet absorber C is a content of ultraviolet absorber C with respect to 100 parts by mass in total of the (meth)acrylate A and the urethane (meth)acrylate B.

**[Table 1]**

| | | Raw material | Example 1 | Example 2 | Example 3 | Example 4 | Example 5 |
|---|---|---|---|---|---|---|---|
| | (Meth)acrylate A | CN2302 | 10 | - | - | 10 | 10 |
| | | CN2303 | - | 10 | - | - | - |
| | | V#1000 | - | - | 10 | - | - |
| | Comparative product of (meth)acrylate A | DPCA-20 | - | - | - | - | - |
| | Urethane (meth)acrylate B | PU-1 | 5.5 | 5.5 | 5.5 | 7 | 5.5 |
| | | BU-1 | | | | | |
| | Ultraviolet absorber C | Tinuvin 405 | 3 | 3 | 3 | 3 | 3 |
| | | Tinuvin PS | - | - | - | - | - |
| Formulation composition [parts] | | Seesorb 102 | - | - | - | - | - |
| | (Meth)acrylate E having polycarbonate skeleton | UM-90DA | - | - | - | 3 | 4.5 |
| | Another (meth)acrylate | CHA | 14.5 | 14.5 | 14.5 | 10 | 10 |
| | Photopolymerization initiator D | Benzophenone | 0.3 | 0.3 | 0.3 | 0.3 | 0.3 |
| | | Speedcure MBF | 0.3 | 0.3 | 0.3 | 0.3 | 0.3 |
| | | Omnirad 651 | 0.3 | 0.3 | 0.3 | 0.3 | 0.3 |
| | | Speedcure TPO | 0.3 | 0.3 | 0.3 | 0.3 | 0.3 |
| | Other additives | Tinuvin 123 | 0.15 | 0.15 | 0.15 | 0.15 | 0.15 |
| | | BYK-333 | 0.04 | 0.04 | 0.04 | 0.04 | 0.04 |
| | Organic solvent | PGM | 8.6 | 8.6 | 8.6 | 8.6 | 8.6 |
| | Total mass | | 42.99 | 42.99 | 42.99 | 42.99 | 42.99 |
| Content α [parts by mass] of (meth)acrylate A | | | 64.5 | 64.5 | 64.5 | 58.8 | 64.5 |
| Content β [parts by mass] of ultraviolet absorber C | | | 19.4 | 19.4 | 19.4 | 19.4 | 19.4 |
| Solid content concentration (mass%) | | | 80.0 | 80.0 | 80.0 | 80.0 | 80.0 |
| Viscosity (at 25°C) [mPa·s] of curable composition | | | 20.2 | 15.3 | 27.2 | 34.7 | 32.4 |
| Evaluation Results | Hot water resistance-1 | | A | A | A | A | A |
| | Hot water resistance-2 | | B | B | B | A | A |
| | Weatherability | | A | A | A | A | A |
| | Spray coating properties | | A | A | A | A | A |

**[Table 2]**

| | | Raw material | Example 6 | Example 7 | Example 8 | Example 9 | Example 10 |
|---|---|---|---|---|---|---|---|
| | (Meth)acrylate A | CN2302 | 10 | 10 | 10 | 10 | 20 |
| | | CN2303 | - | - | - | - | - |
| | | V#1000 | - | - | - | - | - |
| | Comparative product of (meth)acrylate A | DPCA-20 | - | - | - | - | - |
| | Urethane (meth)acrylate B | PU-1 | 5.5 | 5.5 | 5.5 | 5.5 | 10 |
| | | BU-1 | | | | | - |
| | Ultraviolet absorber C | Tinuvin 405 | 0.5 | 7 | - | - | 3 |
| | | Tinuvin PS | - | - | 3 | - | - |
| | | Seesorb 102 | - | - | - | 3 | - |
| Formulation composition [parts] | (Meth)acrylate E having polycarbonate skeleton | UM-90DA | 4.5 | 4.5 | 4.5 | 4.5 | |
| | Another (meth)acrylate | CHA | 10 | 10 | 10 | 10 | - |
| | Photopolymerization initiator D | Benzophenone | 0.3 | 0.3 | 0.3 | 0.3 | 0.3 |
| | | Speedcure MBF | 0.3 | 0.3 | 0.3 | 0.3 | 0.3 |
| | | Omnirad 651 | 0.3 | 0.3 | 0.3 | 0.3 | 0.3 |
| | | Speedcure TPO | 0.3 | 0.3 | 0.3 | 0.3 | 0.3 |
| | Other additives | Tinuvin 123 | 0.15 | 0.15 | 0.15 | 0.15 | 0.15 |
| | | BYK-333 | 0.04 | 0.04 | 0.04 | 0.04 | 0.04 |
| | Organic solvent | PGM | 8.0 | 9.6 | 8.6 | 8.6 | 8.6 |
| | Total mass | | 39.86 | 47.98 | 42.99 | 42.99 | 42.99 |
| Content α [parts by mass] of (meth)acrylate A | | | 64.5 | 64.5 | 64.5 | 64.5 | 66.7 |
| Content β [parts by mass] of ultraviolet absorber C | | | 3.2 | 45.2 | 19.4 | 19.4 | 10.0 |
| Solid content concentration (mass%) | | | 80.0 | 80.0 | 80.0 | 80.0 | 80.0 |
| Viscosity (at 25°C) [mPa·s] of curable composition | | | 33.5 | 30.6 | 32.1 | 31.8 | 102.8 |
| Evaluation Results | Hot water resistance-1 | | A | B | A | A | A |
| | Hot water resistance-2 | | A | B | A | A | B |
| | Weatherability | | B | A | B | B | A |
| | Spray coating properties | | A | A | A | A | B |

**[Table 3]**

| | | Raw material | Example 11 | Example 12 | Example 13 | Example 14 | Comparative Example 1 |
|---|---|---|---|---|---|---|---|
| | (Meth)acrylate A | CN2302 | - | - | 12 | 14 | 15 |
| | | CN2303 | 20 | 20 | - | - | - |
| | | V#1000 | - | - | - | - | - |
| | Comparative product of (meth)acrylate A | DPCA-20 | - | - | - | - | - |
| | Urethane (meth)acrylate B | PU-1 | 10 | 10 | 3.5 | 1.5 | 15 |
| | | BU-1 | | | | | - |
| | Ultraviolet absorber C | Tinuvin 405 | 3 | - | 3 | 3 | 3 |
| | | Tinuvin PS | - | 3 | - | - | - |
| | | Seesorb 102 | - | - | - | - | - |
| Formulation composition [parts] | (Meth)acrylate E having polycarbonate skeleton | UM-90DA | - | - | - | - | - |
| | Another (meth)acrylate | CHA | - | - | 14.5 | 14.5 | - |
| | Photopolymerization initiator D | Benzophenone | 0.3 | 0.3 | 0.3 | 0.3 | 0.3 |
| | | Speedcure MBF | 0.3 | 0.3 | 0.3 | 0.3 | 0.3 |
| | | Omnirad 651 | 0.3 | 0.3 | 0.3 | 0.3 | 0.3 |
| | | Speedcure TPO | 0.3 | 0.3 | 0.3 | 0.3 | 0.3 |
| | Other additives | Tinuvin 123 | 0.15 | 0.15 | 0.15 | 0.15 | 0.15 |
| | | BYK-333 | 0.04 | 0.04 | 0.04 | 0.04 | 0.04 |
| | Organic solvent | PGM | 8.6 | 8.6 | 8.6 | 8.6 | 8.6 |
| | Total mass | | 42.99 | 42.99 | 42.99 | 42.99 | 42.99 |
| Content α [parts by mass] of (meth)acrylate A | | | 66.7 | 66.7 | 77.4 | 90.3 | 50.0 |
| Content β [parts by mass] of ultraviolet absorber C | | | 10.0 | 10.0 | 19.4 | 19.4 | 19.4 |
| Solid content concentration (mass%) | | | 80.0 | 80.0 | 80.0 | 80.0 | 80.0 |
| Viscosity (at 25°C) [mPa·s] of curable composition | | | 93.2 | 93.1 | 19.5 | 16.6 | 225.7 |
| Evaluation Results | Hot water resistance-1 | | A | A | A | A | A |
| | Hot water resistance-2 | | B | B | B | B | B |
| | Weatherability | | A | B | B | B | B |
| | Spray coating properties | | B | B | A | A | C |

**[Table 4]**

| | | Raw material | Comparative Example 2 | Comparative Example 3 | Comparative Example 4 | Comparative Example 5 | Comparative Example 6 |
|---|---|---|---|---|---|---|---|
| Formulation composition [parts] | (Meth)acrylate A | CN2302 | - | 10 | 10 | 10 | 15 |
| | | CN2303 | - | - | - | - | - |
| | | V#1000 | - | - | - | - | - |
| | Comparative product of (meth)acrylate A | DPCA-20 | 20 | - | - | - | - |
| | Urethane (meth)acrylate B | PU-1 | - | 5.5 | 5.5 | 5.5 | 0.5 |
| | | BU-1 | 13.3 | - | - | - | - |
| | Ultraviolet absorber C | Tinuvin 405 | 3 | - | 0.2 | 12 | 3 |
| | | Tinuvin PS | - | - | - | - | - |
| | | Seesorb 102 | - | - | - | - | - |
| | (Meth)acrylate E having polycarbonate skeleton | UM-90DA | - | 4.5 | 4.5 | 4.5 | - |
| | Another (meth)acrylate | CHA | - | 10 | 10 | 10 | 14.5 |
| | Photopolymerization initiator D | Benzophenone | 0.3 | 0.3 | 0.3 | 0.3 | 0.3 |
| | | Speedcure MBF | 0.3 | 0.3 | 0.3 | 0.3 | 0.3 |
| | | Omnirad 651 | 0.3 | 0.3 | 0.3 | 0.3 | 0.3 |
| | | Speedcure TPO | 0.3 | 0.3 | 0.3 | 0.3 | 0.3 |
| | Other additives | Tinuvin 123 | 0.15 | 0.15 | 0.15 | 0.15 | 0.15 |
| | | BYK-333 | 0.04 | 0.04 | 0.04 | 0.04 | 0.04 |
| | Organic solvent | PGM | 5.3 | 7.9 | 7.9 | 10.9 | 8.6 |
| | Total mass | | 42.99 | 39.24 | 39.49 | 54.29 | 42.99 |
| Content α [parts by mass] of (meth)acrylate A | | | - | 64.5 | 64.5 | 64.5 | 96.8 |
| Content β [parts by mass] of ultraviolet absorber C | | | 22.6 | - | 1.3 | 77.4 | 19.4 |
| Solid content concentration (mass%) | | | 80.0 | 80.0 | 80.0 | 80.0 | 80.0 |
| Viscosity (at 25°C) [mPa·s] of curable composition | | | 537.1 | 32.5 | 32.5 | 32.5 | 15.6 |
| Evaluation Results | Hot water resistance-1 | | A | A | A | C | A |
| | Hot water resistance-2 | | B | A | A | C | C |
| | Weatherability | | A | C | C | A | B |
| | Spray coating properties | | C | A | A | A | A |

The curable composition of Comparative Example 1 having a viscosity (at 25°C) of greater than 200 mPa·s had inferior spray coating properties.

The curable composition of Comparative Example 2 containing no (meth)acrylate A had inferior spray coating properties.

The curable composition of Comparative Example 3 containing no ultraviolet absorber had inferior weatherability. The curable composition of Comparative Example 4 in which the content β of ultraviolet absorber C was less than the lower limit value of the numerical range specified in the present invention had inferior weatherability.

The curable composition of Comparative Example 5 in which the content β of ultraviolet absorber C was greater than the upper limit value of the numerical range specified in the present invention had inferior hot water resistance.

The curable composition of Comparative Example 6 in which the content α of (meth)acrylate A was greater than the upper limit value of the numerical range specified in the present invention had inferior hot water resistance.

### [Industrial Applicability]

The curable composition of the present invention has excellent coating properties, and the cured product of the curable composition of the present invention has excellent hot water resistance and weatherability. Accordingly, the curable composition of the present invention can be suitably used for applications such as hard coats for various lamp lenses for automobiles.

## Claims

1. A curable composition comprising:
a (meth)acrylate A;
a urethane (meth)acrylate B;
an ultraviolet absorber C; and
a photopolymerization initiator D,
wherein the (meth)acrylate A has at least one of a dendrimer structure and a hyperbranched structure,
wherein a content of the (meth)acrylate A is 55 parts by mass to 95 parts by mass based on 100 parts by mass in total of the (meth)acrylate A and the urethane (meth)acrylate B,
wherein a content of the ultraviolet absorber C is 1.5 parts by mass to 60 parts by mass based on 100 parts by mass in total of the (meth)acrylate A and the urethane (meth)acrylate B,
wherein a solid content concentration of the curable composition is greater than or equal to 70 mass%, and
wherein a viscosity of the curable composition at 25°C which is measured with an E-type viscometer is less than or equal to 200 mPa·s.

2. The curable composition according to claim 1, further comprising:
a (meth)acrylate E having a polycarbonate skeleton.

3. The curable composition according to claim 2,
wherein the (meth)acrylate E is a cyclohexyl group-containing polycarbonate diol diacrylate.

4. The curable composition according to any one of claims 1 to 3,
wherein the ultraviolet absorber C is a hydroxyphenyltriazine-based ultraviolet absorber.

5. The curable composition according to any one of claims 1 to 4,
wherein the number of acryloyl groups of the (meth)acrylate A is 4 to 18.

6. The curable composition according to any one of claims 1 to 5,
wherein a mass average molecular weight of the (meth)acrylate A is 500 to 5,000.

7. The curable composition according to any one of claims 1 to 6,
wherein a viscosity of the (meth)acrylate A at 20°C which is measured with an E-type viscometer is 10 mPa·s to 10,000 mPa·s.

8. A cured product of the curable composition according to any one of claims 1 to 7.

9. A stacked body comprising:
a base material; and
a layer which is provided on the base material and consisting of the cured product according to claim 8.

10. The stacked body according to claim 9,
wherein the base material is a plastic base material.
